(19) Europäisches Patentamt
European Patent Office
Office européen des brevets

(11) Publication number: 0 223 449 B1

(12) # EUROPEAN PATENT SPECIFICATION

(45) Date of publication of patent specification: 24.07.91 Bulletin 91/30

(51) Int. Cl.5: A01N 43/70, // (A01N43/70, 43:40)

(21) Application number: 86308378.8

(22) Date of filing: 28.10.86

(54) **Method of weed control using diflufenican.**

(30) Priority: 30.10.85 GB 8526735

(43) Date of publication of application: 27.05.87 Bulletin 87/22

(45) Publication of the grant of the patent: 24.07.91 Bulletin 91/30

(84) Designated Contracting States: AT BE CH DE ES FR GB GR IT LI LU NL SE

(56) References cited: EP-A- 0 053 011

(73) Proprietor: MAY & BAKER LIMITED
Dagenham Essex RM10 7XS (GB)

(72) Inventor: Hewett, Richard Henry
May & Baker Limited
Dagenham Essex, RM10 7XS (GB)
Inventor: Veerasekaran, Ponnan
May & Baker Limited
Dagenham Essex, RM10 7XS (GB)

(74) Representative: Bentham, Stephen et al
J.A. Kemp & Co. 14 South Square Gray's Inn
London WC1R 5EU (GB)

EP 0 223 449 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to new herbicidal compositions comprising N-(2,4-difluorophenyl)-2-(3-trifluoromethylphenoxy)nicotinamide of the formula depicted in Figure I hereinafter, which is disclosed in the specification of EP-A-53011 as a pre- and/or post-emergence herbicide, and to their use in agriculture.

1,3,5-Triazine herbicides (hereinafter referred to for convenience as the triazine herbicides) include ametryne, atrazine, aziprotryne, cyanazine, methoprotryne, prometryne, prometon, propazine, simetryne, simazine, terbuthylazine, terbutryne and trietazine.

As a result of research and experimentation it has been discovered that the use of the compound N-(2,4-difluorophenyl)-2-(3-trifluoromethylphenoxy)nicotinamide (hereinafter referred to for convenience as diflufenican) in combination with a triazine herbicide extends the diflufenican spectrum of activity without loss of crop/weed selectivity.

Surprisingly, in addition to this, it has been found that the combined herbicidal activity of diflufenican with the triazine herbicide against many weed species is much greater than expected when applied pre- or post-emergence (e.g. as a pre- or post-emergence spray), i.e. the herbicidal activity of diflufenican with the triazine herbicide showed an unexpected and remarkable degree of synergism on important grass weeds e.g. Echinochloa crus-galli, Digitaria sanguinalis and Setaria viridis and broad-leaf weeds e.g. Abutilon theophrasti, Ipomea purpurea and Xanthium spp., Stellaria media and Galium aparine as defined by Limpel, L.E., P.H. Schuldt and D. Lamont, 1962, Proc. NEWCC 16 :48-53 using the formula :-

$$E = X + Y - \frac{XY}{100}$$

where E = the expected percent inhibition of growth by a mixture of two herbicides at defined doses.

X = the percent inhibition of growth by herbicide A at a defined dose.

and Y = the percent inhibition of growth by herbicide B at a defined dose

(when the observed response is greater than expected the combination is synergistic).

The remarkable synergism gives improved reliability of control of a large number of weed species occurring in agriculture and permits a considerable reduction in the amount of active ingredient required for weed control.

A high level of control of these species is desirable a) to prevent loss of yield, through competition or difficulties with harvesting and seed cleaning and b) to prevent unacceptable weed seed return to the soil.

Accordingly the present invention provides a method for controlling the growth of weeds (i.e. undesired vegetation) at a locus which comprises applying to the locus (a) a 1,3,5-triazine herbicide of the general formula II shown in Figure II wherein $R^1$ represents the chlorine atom, $R^2$ represents the azido group, or a straight- or branched-chain alkylamino group containing from 1 to 4 carbon atoms, a dialkylamino group (in which the alkyl moieties may be the same or different and each contain from 1 to 4 carbon atoms) or a cycloalkylamino group containing from 3 to 7 carbon atoms in which the alkyl and cycloalkyl moieties may be substituted by one or more substituents chosen from cyano and carboxy groups, straight- or branched-chain alkoxy groups containing from 1 to 4 carbon atoms and straight- or branched-chain alkoxycarbonyl groups containing from 2 to 5 carbon atoms and $R^3$ represents a straight- or branched-chain alkylamino group containing from 1 to 6 carbon atoms, and (b) diflufenican ; the application rate of the triazine herbicide being from 50g to 10kg per hectare and the application rate of diflufenican being from 25g to 500g per hectare. For this purpose, the triazine herbicide and diflufenican are normally used in the form of herbicidal compositions (i.e. in association with compatible diluents or carriers and/or surface-active agents suitable for use in herbicidal compositions), for example as hereinafter described.

Preferred compounds of general formula II are those wherein $R^3$ represents a straight- or branched-chain alkylamino group containing from 1 to 4 carbon atoms.

Especially preferred compounds of general formula II are those wherein (a) $R^2$ represents the 1-cyano-1-methylethylamino group and $R^3$ represents the ethylamino group ;
or (b) $R^2$ and $R^3$ each represent and isopropylamino group or (c) $R^2$ represents the ethylamino group and $R^3$ represents a t.butylamino group which are known respectively as cyanazine, propazine and terbuthylazine, or (d) $R^2$ represents the diethylamino group and $R^3$ represents an ethylamino group which is known as trietazine, and more especially compounds of general formula II wherein $R^1$ represents the chlorine atom and (e) $R^2$ represents the ethylamino group and $R^3$ represents an isopropylamino or ethylamino group which are known respectively as atrazine and simazine.

The amounts of the triazine herbicide and diflufenican applied vary with the nature of the weeds, the compositions used, the time of application, the climatic and edaphic conditions and (when used to control the growth of weeds in crop-growing areas) the nature of the crops. When applied to a crop-growing area, the rate of application should be sufficient to control the growth of weeds without causing substantial permanent damage to the crop. In general, taking these factors into account, application rates from 50 g to 10 kg of the triazine herbicide and from 25 g to 500 g of diflufenican per hectare (e.g. from 250 g to 10 kg of the triazine herbicide and from 50 g to 500 g of diflufenican per hectare) give good results. However, it is to be understood that higher or lower application rates may be used, depending upon the particular problem of weed control encountered.

The triazine herbicide and diflufenican in combination may be used to control selectively the growth of weeds, for example to control the growth of those species hereinafter mentioned, by pre- or post-emergence applicaton in a directional or non-directional fashion, e.g. by directional or non-directional spraying, to a locus of weed infestation which is an area used, or to be used, for growing crops, for example cereals, e.g. wheat, barley, oats, rye, maize and rice, soya beans, field beans, peas and lupins before or after sowing of the crop or before or after emergence of the crop. For the selective control of weeds at a locus of weed infestation which is an area used, or to be used, for the growing of crops, e.g. the crops hereinbefore mentioned, application rates from 50 g to 1000 g of the triazine herbicide and from 25 g to 250 g of diflufenican per hectare (e.g. from 250 g to 1000 g of the triazine herbicide and from 50 g to 250 g of diflufenican per hectare) are particularly suitable.

According to a feature of the present invention, there is provided a method for the control of the growth of weeds by pre- or post-emergence application which comprises the combined use of (a) a 1,3,5-triazine herbicide especially atrazine or simazine and (b) diflufenican at application rates of between 50 and 1000 g/ha, and between 25 and 250 g/ha respectively, of (a) and (b) in proportions of 40 :1 to 1 :5 wt/wt of (a) to (b), to control a very wide spectrum of annual broad-leafed weeds and grass weeds in maize or lupins, without significant permanent damage to the crop. The combined use described above offers both foliar and residual activity and consequently can be employed over a long period of crop development, i.e. from pre-weed pre-crop emergence to post-weed post-crop emergence. In the method according to this feature of the present invention, the combined use of (a) the 1,3,5-triazine herbicide simazine and (b) diflufenican to control weeds in lupins is preferred.

According to a feature of the present invention, there is provided a method for the control of the growth of weeds by pre- or post-emergence application which comprises the combined use of (a) the triazine herbicide especially atrazine and (b) diflufenican at application rates of between 250 and 1000 g/ha, and between 25 and 250 g/ha (e.g. from 50 to 250 g/ha) respectively, of (a) and (b) in proportions of 40 :1 to 1 :1 wt/wt of (a) to (b), to control a very wide spectrum of annual broad-leafed weeds and grass weeds in maize, without significant permanent damage to the crop.

The triazine herbicide and diflufenican in combination may also be used to control the growth of weeds, especially those indicated below, by pre- or post-emergence application in established orchards and other tree-growing areas, for example forests, woods and parks, and plantations e.g. sugar cane, oil palm and rubber plantations. For this purpose they may be applied in a directional or non-directional fashion (e.g. by directional or non-directional spraying) to the weeds or to the soil in which they are expected to appear, before or after planting of the trees or plantations at application rates between 1000 g and 5000 g of the triazine herbicide and between 100 g and 500 g of diflufenican per hectare.

The triazine herbicide and diflufenican in combination may also be used to control the growth of weeds, especially those indicated below, at loci which are not crop-growing areas but in which the control of weeds is nevertheless desirable. Examples of such non-crop-growing areas include airfields, industrial sites, railways, roadside verges, the verges of rivers, irrigation and other waterways, scrublands and fallow or uncultivated land, in particular where it is desired to control the growth of weeds in order to reduce fire risks. When used for such purposes in which a total herbicidal effect is frequently desired, the active compounds are normally applied at dosage rates higher than those used in crop-growing areas as hereinbefore described. The precise dosage will depend upon the nature of the vegetation treated and the effect sought. Pre- or post-emergence application, and preferably pre-emergence application, in a directional or non-directional fashion (e.g. by directional or non-directional spraying) at application rates between 1 kg and 10 kg of the triazine herbicide and between 200 g and 500 g of diflufenican per hectare are particularly suitable for this purpose.

By the term 'pre-emergence application' is meant application to the soil in which the weed seeds or seedlings are present before emergence of the weeds above the surface of the soil. By the term 'post-emergence application' is meant application to the aerial or exposed portions of the weeds which have emerged above the surface of the soil. By the term 'foliar activity' is meant herbicidal activity produced by application to the aerial or exposed portions of the weeds which have emerged above the surface of the soil. By the term 'residual activity' is meant herbicidal activity produced by application to the soil in which weed seeds or seedlings are present before emergence of the weeds above the surface of the soil, whereby seedlings present at the time of application or which germinate subsequent to application from seeds present in the soil, are controlled.

Weeds that may be controlled by the method include :- from broad-leaf weeds, Abutilon theophrasti, Amaranthus retroflexus, Amsinckia intermedia, Anagallis arvensis, Anthemis arvensis, Anthemis cotula, Atriplex patula, Brassica nigra, Capsella bursa-pastoris, Chenopodium album, Chrysanthemum segetum, Cirsium

arvense, Datura stramonium, Desmodium tortuosum, Emex australis, Epilobium paniculatum, Euphorbia helioscopia, Fumaria officinalis, Galeopsis tetrahit, Galium aparine, Geranium dissectum, Ipomea purpurea, Lamium amplexicaule, Lamium purpureum, Lapsana communis, Matricaria inodora, Monochoria vaginalis, Montia linearis, Papaver rhoeas, Physalis longifolia, Plantago lanceolata, Polygonum spp. (e.g. Polygonum aviculare, Polygonum convolvulus and Polygonum persicaria), Portulaca oleracea, Raphanus raphanistrum, Rotala indica, Rumex obtusifolius, Saponaria vaccaria, Senecio vulgaris, Sesbania florida, Sida spinosa, Silene alba, Sinapis arvensis, Sisymbrium altissimum, Solanum nigrum, Sonchus arvensis, Spergula arvensis, Stellaria media, Thlaspi arvense, Tribulus terrestria, Urtica urens, Veronica hederifolia, Veronica persica, Vicia sativa, Viola arvensis, Xanthium spp. e.g. Xanthium strumarium and Xanthium pennsylvanicum and from grass weeds, Alopecurus myosuroides, Apera spica-venti, Agrostis stolonifera, Poa annua, Poa trivialis, Digitaria sanguinalis, Echinochloa crus-galli, Eleusine indica and Setaria viridis.

The pattern of persistence of the triazine berbicide and the diflufenican allow the method of the present invention to be practised by the time-separated application of separate formulations.

In accordance with usual practice, a tank mix may be prepared prior to use by combining separate formulations of the individual herbicidal components.

The following Experiments illustrate the present invention :-

EXPERIMENT 1

The following greenhouse experiment demonstrates the synergistic activity of the combined use of atrazine and diflufenican in controlling the growth of certain weeds.

Greenhouse experiment showing nature of biological synergism between atrazine and diflufenican

An experiment was carried out to investigate the interaction of atrazine and diflufenican at a range of doses, i.e. 0, 125 and 250 g a.i./ha of atrazine plus diflufenican at 0, 125 and 250 g a.i./ha.

All treatments were made in an appropriate volume of water by mixing appropriate quantities of a 50% w/w wettable powder of atrazine (commercial product) and diflufenican formulated as an experimental wettable powder (Example 1 hereinafter) containing 50% w/w active ingredient to give the above dose rates /ha in a spray volume of 260 1/ha. All treatments were applied using a laboratory sprayer fitted with a Spraying Systems Teejet SS 8003E operating at 2.1 kgf/cm$^2$. Treatments were applied to Echinochloa crus-galli, Abutilon theophrasti, Ipomea purpurea and Xanthium strumarium seeds sown 1-2 cm deep at an appropriate number to give an even population of plants in a loam soil in 9 cm diameter plastic pots.

There were 3 replicate pots per treatment arranged in a randomised block design. The pots were watered by a combination of overhead and sub-irrigation after treatment. A visual assessment of weed control was made 21 days after treatment using a 0-10 scale where 0 = no activity and 10 = 100% control compared to the untreated plants.

The mean % weed control was observed for each species and tabulated in Table I below for each treatment together with the expected level of weed control anticipated for the combinations of the two herbicides using the Limpel formula :-

$$E = X + Y - \frac{XY}{100}$$

% weed control

| Herbicide | Dose g ai/ha | *Echinochloa crus-galli* O | *Echinochloa crus-galli* E | *Abutilon theophrasti* O | *Abutilon theophrasti* E | *Ipomea purpurea* O | *Ipomea purpurea* E | *Xanthium strumarium* O | *Xanthium strumarium* E |
|---|---|---|---|---|---|---|---|---|---|
| Diflufenican (dif) | 125 | 27 | - | 30 | - | 30 | - | 0 | - |
| Diflufenican | 250 | 50 | - | 70 | - | 60 | - | 10 | - |
| Atrazine(atr) | 125 | 0 | - | 0 | - | 25 | - | 10 | - |
| Atrazine(atr) | 250 | 20 | - | 33 | - | 47 | - | 30 | - |
| dif + atr | 125 + 125 | 40 | 27 | 67 | 30 | 63 | 48 | 30 | 10 |
| dif + atr | 125 + 250 | 70 | 42 | 77 | 53 | 87 | 63 | 58 | 30 |
| dif + atr | 250 + 250 | 90 | 60 | 97 | 80 | 99 | 79 | 90 | 37 |

O = Observed E = Expected

TABLE I

These results show clearly that the combination is synergistic as the observed weed control for the combination of the two herbicides was much greater than expected.

EXPERIMENT 2

Diflufenican formulated as an experimental aqueous suspension concentrate containing 4.17 lbs ai/U.S. gallon (500 g ai/litre) was applied alone at 0.125 lbs ai/acre (140 g ai/hectare)and tank-mixed with atrazine formulated as a 4 lb ai/U.S. gallon (480 g ai/litre) aqueous suspension concentrate (commercial formulation) at a dose of 0.125 lbs ai/acre (140 g ai/hectare) diflufenican plus 0.25 lbs ai/acre (280 g ai/hectare) atrazine. The atrazine was also applied alone at 0.25 lbs ai/acre (280 g ai/hectare). The treatments were applied as a post-emergence spray at a volume rate of 30 U.S. gallons per acre (280 litre/hectare) to Digitaria sanguinalis (2 leaf stage), Echinochloa crus-galli (2 leaf stage) and maize (4 leaf stage) in a replicated field trial. There were three replicate 12 foot x 20 foot (3.6 m x 6 m) plots per treatment. The weeds and the crop were assessed visually for percentage phytotoxicity compared with untreated plots three weeks after spraying.

The results expressed as mean % phytotoxicity were calculated and tabulated in Table II below together with the expected weed control or crop effect for the combination using the Limpel formula.

| Herbicide | Dose lbs ai/acre (g ai/hectare) | % phytotoxicity *Digitaria sanguinalis* O | E | *Echinochloa crus-galli* O | E | Maize O | E |
|---|---|---|---|---|---|---|---|
| Diflufenican | 0.125 (140) | 7 | - | 25 | - | 8 | - |
| Atrazine | 0.25 (280) | 5 | - | 15 | - | 5 | - |
| dif + atr | 0.125 + 0.25 (140 + 280) | 98 | 12 | 99 | 36 | 7 | 13 |

TABLE II

A remarkable degree of synergism was found on these grass weeds, whereas on the crop there was no synergism giving much improved selectivity.

Experiment 3

The following glasshouse experiment demonstrates the synergistic activity of the combined use of simazine and diflufenican in controlling the growth of certain weeds occurring in lupin crops.

Glasshouse experiment showing the nature of biological synergism between simazine and diflufenican

An experiment was carried out to investigate the interaction of simazine and diflufenican at a range of doses, i.e. 0, 62.5, 125 and 250 g ai/ha of simazine plus diflufenican at 0, 31.25, 62.5 and 125 g ai/ha.

All treatments were made in an appropriate volume of water by mixing appropriate quantities of a commercial 50% w/v aqueous suspension concentrate formulation of simazine with an experimental 50% w/v aqueous suspension concentrate formulation of diflufenican (Example 2 hereinafter) to give the above dose rates in a spray volume of 290 l/ha. All treatments were applied using a laboratory sprayer fitted with a Spraying Systems Teejet SS8003E operating at 2.94 kgf/cm$^2$. Treatments were applied post-emergence to the following crop and weeds at the stated growth stage :-

| | | |
|---|---|---|
| Lupin | cotyledon stage | 2 per pot |
| *Digitaria sanguinalis* | 2 leaf stage | 4 per pot |
| *Echinochloa crus-galli* | 2 leaf stage | 4 per pot |
| *Setaria viridis* | 1 leaf stage | 15 per pot |
| *Galium aparine* | 1-2 whorls | 3 per pot |
| *Stellaria media* | 4-6 leaves | 4 per pot |

Plants were grown in non-sterile loamy soil in 7.5 cm square pots. There were 4 replicate pots per treatment which were arranged in a randomised block design in a glasshouse after spraying. The pots were watered by a combination of overhead irrigation and sub-irrigation. A visual assessment of phytotoxicity was made 21 days after treatment as a percentage compared to the untreated pots. The mean % phytotoxicity was calculated for each treatment and species, and tabulated in Tables III and IV. The expected level of phytotoxicity anticipated for the combinations of the two herbicides was calculated using the Limpel formula.

These results show clearly that the combinations of the herbicides diflufenican and simazine were synergistic giving better than expected control of the grass weeds *Digitaria*, *Setaria* and *Echinochloa* and the broad leaf weeds *Galium* and *Stellaria* occurring in lupin crops.

Table III : Efficacy of Diflufenican/Simazine Mixtures: Percentage Control of Grass Weeds

| Herbicide | Dose g ai/ha | Digitaria sanguinalis | | Echinochloa crus-galli | | Setaria viridis | |
|---|---|---|---|---|---|---|---|
| | | O | E | O | E | O | E |
| Diflufenican (dif) | 31.25 | 9 | - | 0 | - | 23 | - |
| Diflufenican | 62.50 | 20 | - | 8 | - | 67 | - |
| Diflufenican | 125.00 | 20 | - | 20 | - | 78 | - |
| Simazine (sim) | 62.50 | 2 | - | 0 | - | 0 | - |
| Simazine | 125.00 | 10 | - | 13 | - | 51 | - |
| Simazine | 250.00 | 30 | - | 53 | - | 52 | - |
| dif + sim | 31.25 + 62.5 | 16 | 11 | 20 | 0 | 73 | 23 |
| dif + sim | 31.25 + 125 | 30 | 18 | 38 | 13 | 85 | 62 |
| dif + sim | 31.25 + 250 | 73 | 36 | 67 | 53 | 88 | 63 |
| dif + sim | 62.5 + 62.5 | 27 | 22 | 30 | 8 | 92 | 67 |
| dif + sim | 62.5 + 125 | 47 | 28 | 28 | 20 | 90 | 84 |
| dif + sim | 62.5 + 250 | 77 | 44 | 90 | 57 | 92 | 84 |
| dif + sim | 125 + 62.5 | 45 | 22 | 50 | 20 | 80 | 78 |
| dif + sim | 125 + 125 | 73 | 28 | 74 | 30 | 91 | 89 |
| dif + sim | 125 + 250 | 85 | 44 | 84 | 63 | 95 | 89 |

O = Observed E = Expected

Table IV : Efficacy of Diflufenican/Simazine Mixtures: Percentage Control of Broad Leaf Weeds and Percentage Crop Damage

| Herbicide | Dose g ai/ha | Weeds | | | | Crop | |
|---|---|---|---|---|---|---|---|
| | | Galium aparine | | Stellaria media | | Lupin | |
| | | O | E | O | E | O | E |
| Diflufenican (dif) | 31.25 | 21 | - | 35 | - | 4 | - |
| Diflufenican | 62.50 | 50 | - | 73 | - | 2 | - |
| Diflufenican | 125.00 | 74 | - | 70 | - | 4 | - |
| Simazine (sim) | 62.50 | 0 | - | 3 | - | 0 | - |
| Simazine | 125.00 | 17 | - | 95 | - | 2 | - |
| Simazine | 250.00 | 38 | - | 100 | - | 1 | - |
| dif + sim | 31.25 + 62.5 | 66 | 21 | 100 | 37 | 4 | 4 |
| dif + sim | 31.25 + 125 | 80 | 34 | 100 | 97 | 4 | 6 |
| dif + sim | 31.25 + 250 | 97 | 51 | 100 | 100 | 4 | 5 |
| dif + sim | 62.5 + 62.5 | 53 | 50 | 100 | 74 | 4 | 2 |
| dif + sim | 62.5 + 125 | 90 | 59 | 100 | 99 | 5 | 4 |
| dif + sim | 62.5 + 250 | 90 | 69 | 100 | 100 | 5 | 3 |
| dif + sim | 125 + 62.5 | 76 | 74 | 100 | 71 | 6 | 4 |
| dif + sim | 125 + 125 | 100 | 78 | 100 | 99 | 8 | 6 |
| dif + sim | 125 + 250 | 100 | 84 | 100 | 100 | 4 | 5 |

O = Observed E = Expected

According to a further feature of the present invention, there are provided compositions suitable for herbicidal use comprising (a) a 1,3,5-triazine herbicide and (b) diflufenican in proportions of preferably 400 :1 to 1 :10 (e.g. 200 :1 to 1 :2) wt/wt of (a) to (b) [preferably 40 :1 to 1 :5 (e.g. 20 :1 to 1 :1) wt/wt of (a) to (b)] in association with, and preferably homogeneously dispersed in, a herbicidally-acceptable diluent or carrier and/or surface-active agent (i.e. diluents or carriers or surface-active agents of the type generally accepted in the art as being suitable for use in herbicidal compositions and which are compatible with the triazine herbicide and diflufenican). The term "homogeneously dispersed" is used to include compositions in which the triazine herbicide and diflufenican are dissolved in the other components. The term "herbicidal compositions" is used in a broad sense to include not only compositions which are ready for use as herbicides but also concentrates which must be diluted before use. Preferably, the compositions contain from 0.05 to 90% by weight of the triazine herbicide and diflufenican.

The herbicidal compositions may contain both a diluent or carrier and a surface-active (e.g. wetting, dispersing, or emulsifying) agent. Surface-active agents which may be present in herbicidal compositions of the present invention may be of the ionic or non-ionic types, for example sulphoricinoleates, quaternary ammonium derivatives, products based on condensates of ethylene oxide with nonyl- or octyl-phenols, or carboxylic acid esters of anhydrosorbitols which have been rendered soluble by etherification of the free hydroxy groups by condensation with ethylene oxide, alkali and alkaline earth metal salts or sulphuric acid esters and sulphonic acids such as dinonyl- and dioctyl-sodium sulphono-succinates and alkali and alkaline earth metal salts of high molecular weight sulphonic acid derivatives such as sodium and calcium lignosulphonates. Examples of suitable solid diluents or carriers are aluminium silicate, talc, calcined magnesia, kieselguhr, tricalcium phosphate, powdered cork, adsorbent carbon black and clays such as kaolin and bentonite. The solid compositions (which may take the form of dusts, granules or wettable powders) are preferably prepared by grinding the triazine herbicide and diflufenican with solid diluents or by impregnating the solid diluents or carriers with solutions of the triazine herbicide and diflufenican in volatile solvents, evaporating the solvents and, if necessary, grinding the products so as to obtain powders. Granular formulations may be prepared by absorbing the triazine herbicide and diflufenican (dissolved in volatile solvents) onto the solid diluents or carriers in granular form and evaporating the solvents, or by granulating compositions in powder form obtained as described above. Solid herbicidal compositions, particularly wettable powders, may contain wetting or dispersing agents (for example of the types described above), which may also, when solid, serve as diluents or carriers.

Liquid compositions according to the invention may take the form of aqueous, organic or aqueous-organic solutions, suspensions and emulsions which may incorporate a surface-active agent. Suitable liquid diluents for incorporation in the liquid compositions include water, acetophenone, cyclohexanone, isophorone, toluene, xylene and mineral, animal and vegetable oils (and mixtures of these diluents). Surface-active agents, which may be present in the liquid compositions, may be ionic or non-ionic (for example of the types described above) and may, when liquid, also serve as diluents or carriers.

Wettable powders and liquid compositions in the form of concentrates may be diluted with water or other suitable diluents, for example mineral or vegetable oils, particularly in the case of liquid concentrates in which the diluent or carrier is an oil, to give compositions ready for use. When desired, liquid compositions of the triazine herbicide and diflufenican may be used in the form of self-emulsifying concentrates containing the active substances dissolved in the emulsifying agents or in solvents containing emulsifying agents compatible with the active substances, the simple addition of water to such concentrates producing compositions ready for use.

Liquid concentrates in which the diluent or carrier is an oil may be used without further dilution using the electrostatic spray technique.

Herbicidal compositions according to the present invention may also contain, if desired, conventional adjuvants such as adhesives, protective colloids, thickeners, penetrating agents, stabilisers, sequestering agents, anti-caking agents, colouring agents and corrosion inhibitors. These adjuvants may also serve as carriers or diluents.

Preferred herbicidal compositions according to the present invention are aqueous suspension concentrates which comprise from 10 to 70% w/v of the triazine herbicide and diflufenican, from 2 to 10% w/v of surface-active agent, from 0.1 to 5% w/v of thickener and from 15 to 87.9% by volume of water ; wettable powders which comprise from 10 to 90% w/w of the triazine herbicide and diflufenican, from 2 to 10% w/w of surface-active agent and from 8 to 88% w/w of solid diluent or carrier ; liquid water soluble concentrates which comprise from 10 to 30% w/v of the triazine herbicide and diflufenican, from 5 to 25% w/v of surface-active agent and from 45 to 85% by volume of water-miscible solvent, e.g. dimethylformamide ; liquid emulsifiable suspension concentrates which comprise 10 to 70% w/v of the triazine herbicide and diflufenican, from 5 to 15% w/v of surface-active agent, from 0.1 to 5% w/v of thickener and from 10 to 84.9% by volume of organic solvent ; granules which comprise from 2 to 10°% w/w of the triazine herbicide and diflufenican, from 0.5 to 2% w/w of surface-active agent and from 88 to 97.5% w/w of granular carrier and emulsifiable concentrates which comprise from 0.05 to 90% w/v, and preferably from 1 to 60% w/v, of the triazine herbicide and diflufenican, from 0.01 to 10% w/v, and preferably from 1 to 10% w/v, of surface-active agent and from 9.99 to 99.94%, and preferably from 39 to 98.99%, by volume of organic solvent.

Herbicidal compositions according to the present invention may also comprise the triazine herbicide and diflufenican in association with, and preferably homogeneously dispersed in, one or more other pesticidally active compounds and, if desired, one or more compatible pesticidally acceptable diluents or carriers, surface-active agents and conventional adjuvants as hereinbefore described. Examples of other pesticidally active compounds which may be included in, or used in conjunction with, the herbicidal compositions of the present invention include herbicides, for example to increase the range of weed species controlled, for example alachlor [α-chloro-2,6-diethyl-N-(methoxymethyl)acetanilide], asulam [methyl (4-aminobenzenesulphonyl)carbamate], alloxydim Na [sodium salt of 2-(1-allyloxyaminobutylidene)-5,5-dimethyl-4-methoxycarbonylcyclohexane-1,3-dione], barban [4-chlorobut-2-ynyl N-(3- chlorophenyl)carbamate], benzoylprop-ethyl [ethyl N-benzoyl-N-(3,4-dichlorophenyl-2-aminopropionate], bromoxynil (3,5-dibromo-4-hydroxybenzonitrile], butachlor [N-(butoxymethyl)- α -chloro-2,6- diethylacetanilide], butylate (S-ethyl N,N-diisobutyl-(thiocarbamate)], carbetamide [D-N-ethyl-2-(phenyl-carbamoyloxy)propionamide], chlorfenpropmethyl [methyl 2-chloro-2-(4-chlorophenyl)propionate], chlorpropham [isopropyl N-(3-chlorophenyl)carbamate], chlortoluron (N'-(3-chloro-4-methylphenyl)-N,N-dimethylurea], cycloate [N'-cyclohexyl-N-ethyl-S-ethyl(thiocarbamate)], 2,4-D [2,4-dichlorophenoxyacetic acid], dalapon [2,2-dichloropropionic acid], 2,4-DB [4-(2,4-dichlorophenoxy)butyric acid], desmedipham [3-(ethoxycarbonylamino)phenyl N-phenylcarbamate], diallate [S-2,3-dichloroallyl-N,N-diisopropyl(thiocarbamate)], dicamba [3,6-dichloro-2-methoxybenzoic acid], dichlorprop [(±)-2-(2,4-dichlorophenoxy)propionic acid], difenzoquat (1,2-dimethyl-3,5-diphenyl-pyrazolium salts], dimefuron (4-[2-chloro-4-(3,3-dimethylureido)phenyl]-2-t-butyl-1,3,4-oxadiazolin-5-one], dinitramine ($N^1$,$N^1$-diethyl-2,6-dinitro-4-trifluoromethyl-m-phenylenediamine], diuron [N'-(3,4-dichlorophenyl)-N,N-dimethylurea], EPTC [S-ethyl N,N-dipropyl(thiocarbamate)], ethofumesate [2-ethoxy-2,3-dihydro-3,3-dimethylbenzofuran-5-yl methylsulphonate], flamprop-isopropyl [isopropyl (±)-2-(N-benzoyl-3-chloro-4-fluoroanilino)propionate], flamprop-methyl [methyl (±)-2-(N-benzoyl-3-chloro-4-fluoroanilino)-propionate], fluometuron [N'-(3-trifluoromethylphenyl)-N,N-dimethylurea], ioxynil [4-hydroxy-3,5-diiodobenzonitrile], isoproturon [N'- (4-isopropylphenyl)- N,N-dimethylurea], linuron [N'-(3,4-dichloropbenyl)-N-methoxy-N-methylurea], MCPA [4-chloro-2-methylphenoxyacetic acid], MCPB [4-(4-chloro-2-methylphenoxy)butyric acid], mecoprop [(±)-2-(4-chloro-2-methyl-phenoxy)propionic acid], metamitron [4-amino-3-methyl-6-phenyl-1,2,4-triazin-5(4H)-one], methabenzthiazuron [(N-benzothiazol-2-yl)-N,N'-dimethylurea], metribuzin [4-amino-6-t-butyl-3- (methylthio)-1,2,4-triazin-5(4H)-one], molinate [S-ethyl N,N-hexamethylene(thiocarbamate)], oxadiazon [3-(2,4-dichloro-5-isopropoxyphenyl)-5-t-butyl-1,3,4- oxadiazolin-2-one], paraquat [1,1'-dimethyl-4,4'- bipyridylium salts], pebulate [S-propyl N-butyl-N-ethyl(thiocarbamate)], phenmedipham [3-(methoxy- carbonylamino)phenyl N-(3-methylphenyl)carbamate], propachlor [α-chloro-N-isopropyl- acetanilide], propanil [N-(3,4-dichlorophenyl)- propionamide], propham [isopropyl N-phenylcarbamate], pyrazone [5-amino-4-chloro-2-phenylpyridazin-3(2H)- one], TCA (trichloroacetic acid), thiobencarb [S-(4-chlorobenzyl)-N,N-diethylthiolcarbamate], tri-allate [S-2,3,3-trichloroallyl N,N-di-isopropyl-(thiocarbamate)], and trifluralin [2,6-dinitro-N,N-dipropyl-4-trifluoromethylaniline] ; insecticides, e.g. carbaryl [naphth-l-yl N-methylcarbamate] ; synthetic pyrethroids, e.g. permethrin and cypermethrin ; and fungicides, e.g. 2,6-dimethyl-4-tridecyl-morpholine, methyl N-(1-butylcarbamoyl-benzimidazol-2-yl)carbamate, 1,2-bis-(3-methoxycarbonyl-2-thioureido)benzene, isopropyl 1-carbamoyl-3-(3,5-dichlorophenyl)hydantoin and 1-(4-chlorophenoxy)-3,3-dimethyl-1-(1,2,4- triazol-l-yl)- butan-2-one. Other biologically active materials which may be included in, or used in conjunction with, the herbicidal compositions of the present invention are plant growth regulators, e.g. succinamic acid, (2-chloroethyl)trimethylammonium chloride and 2-chloroethane-phosphonic acid ; or fertilizers, e.g. containing nitrogen, potassium and phosphorus and trace elements known to be essential to successful plant life, e.g. iron, magnesium, zinc, manganese, cobalt and copper.

Pesticidally active compounds and other biologically active materials which may be included in, or used in conjunction with, the herbicidal compositions of the present invention, for example those hereinbefore mentioned, and which are acids, may, if desired, be utilized in the form of conventional derivatives, for example alkali metal and amine salts and esters.

The compositions of the invention may be made up as an article of manufacture comprising the triazine herbicide and diflufenican and optionally other pesticidally active compounds as hereinbefore described or, as is preferred, a herbicidal composition as hereinbefore described, and preferably a herbicidal concentrate which must be diluted before use, comprising the triazine herbicide and diflufenican within a container for the aforesaid triazine herbicide and diflufenican or a said herbicidal composition, and instructions physically associated with the aforesaid container setting out the manner in which the aforesaid triazine herbicide and diflufenican or herbicidal composition contained therein is to be used to control the growth of weeds. The containers will normally be of the types conventionally used for the storage of chemical substances which are solids at normal ambient temperatures and herbicidal compositions, particularly in the form of concentrates, for example cans and drums of metal, which may be internally-lacquered, and plastics materials, bottles of glass and plastics materials and, when the contents of the container is a solid, for example granular herbicidal compositions, boxes, for example of cardboard, plastics materials and metal, or sacks. The containers will normally be of sufficient capacity to contain amounts of the active ingredients or herbicidal compositions sufficient to treat at least one acre of ground to control the growth of weeds therein but will not exceed a size which is convenient for conventional

methods of handling. The instructions will be physically associated with the container, for example by being printed directly thereon or on a label or tag affixed thereto. The directions will normally indicate that the contents of the container, after dilution if necessary, are to be applied to control the growth of weeds at rates of application from 50 g to 10 kg of the triazine herbicide and from 25 g to 500 g of diflufenican per hectare in the manner and for the purposes hereinbefore described.

According to a further feature of the present invention, there is provided a product comprising (a) a 1,3,5-triazine herbicide and (b) diflufenican as a combined preparation for simultaneous, separate or sequential use in controlling the growth of weeds at a locus.

The following Examples illustrate herbicidal compositions according to the present invention and herbicidal compositions suitable for use in the method for controlling the growth of weeds according to the present invention.

Example 1

A wettable powder was formed thus :-

| | |
|---|---|
| Diflufenican | 50% w/w |
| Nekal BX (sodium alkyl naphthalene sulphonate) | 10% w/w |
| Sodium lignosulphonate | 3% w/w |
| Sopropon T36 (sodium polycarboxylate) | 0.5% w/w |
| Hymod AT (ball clay) | to 100% w/w |

Example 2

An aqueous suspension concentrate was formed from :-

| | |
|---|---|
| Diflufenican | 50% w/v |
| Ethylan BCP (a nonylphenol-ethylene oxide condensate containing 9 moles of ethylene oxide per mole of phenol) | 0.5% w/v |
| Soprophor FL (triethanolamine salt of oxyethylated polyarylphenolphosphate) | 1.0% w/v |
| Sopropon T36 (sodium polycarboxylate) | 0.5% w/v |
| Antifoam FD | 0.1% w/v |
| Rhodigel 23 (xanthan gum) | 0.2% w/v |
| Dichlorophen sodium solution, 40% w/w | 0.25% w/v |
| Water | to 100% by volume |

Example 3

A (20:1) wettable powder was formed from:-

| | |
|---|---|
| Atrazine | 40% w/w |
| Diflufenican | 2% w/w |
| Arylan S (sodium dodecyl benzene sulphonate) | 2% w/w |
| Darvan No. 2 (sodium lignosulphonate) | 5% w/w |
| Aerosil (silicon dioxide of microfine particle size) | 5% w/w |
| Celite PF (synthetic magnesium silicate carrier) | 46% w/w |

by mixing the ingredients and grinding the mixture in a hammer mill to give a wettable powder which may be diluted with water and applied at a rate of 2.5 kg per hectare in 200 litres of spray fluid per hectare to control a wide range of grass and broad-leaf weeds by pre- or post-emergence application to a crop of maize.

Example 4

An (1 :1) aqueous suspension concentrate was formed from-

| | |
|---|---|
| Atrazine | 20% w/v |
| Diflufenican | 20% w/v |
| Ethylan BCP (a nonylphenol-ethylene oxide condensate containing 9 moles of ethylene oxide per mole of phenol) | 2% w/v |
| Antifoam FD (silicone emulsion antifoaming agent) | 0.5% w/v |
| Pluronic L62 (an ethylene oxide/ propylene oxide block co-polymer) | 2% w/v |
| Sopropon T36 (sodium salt of poly-carboxylic acid) | 0.5% w/v |
| Attagel 50 (swelling attapulgite clay) | 0.5% w/v |
| Water | to 100% by volume |

by intimately mixing the ingredients and grinding in a ball-mill for 24 hours. The concentrate thus obtained may be dispersed in water and applied at an application rate of 1.25 litres per hectare pre-emergence to a crop of maize to control a wide range of broad leaf weeds.

Example 5

A (20 :1) water dispersible granule form was formed by granulating the ingredients used in Example 3 with water using a pan granulator into granules of 0.1-2 mm diameter. These granules can then be dispersed at a rate of 2.5 kg in 200 litres of water per hectare to control a wide range of grass and broad-leaf weeds by pre- or post-emergence application to a crop of maize.

Example 6

An (50 :1) emulsifiable suspension concentrate was formed from :-

| | |
|---|---|
| Atrazine | 50% w/v |
| Diflufenican | 1% w/v |
| Ethylan TU (a nonyl phenol/ethylene oxide condensate containing 10 moles of ethylene oxide per mole of phenol) | 10% w/v |
| Bentone 38 (an organic derivative of a magnesium montmorillonite thickener) | 0.5% w/v |
| Aromasol H (an aromatic solvent consisting predominantly of isomeric trimethylbenzenes) | to 100% by volume |

by intimately mixing the ingredients and grinding in a ball-mill for 24 hours. The emulsifiable suspension concentrate thus obtained may be diluted with water and applied at an application rate of 20 litres of emulsifiable suspension concentrate in 1000 litres of spray fluid per hectare to control the growth of unwanted vegetation on an airfield.

Example 7

An (1 :5) aqueous suspension concentrate was formed from :-

| | |
|---|---|
| Simazine | 10% w/v |
| Diflufenican | 50% w/v |
| Ethylan BCP (a nonylphenol-ethylene oxide condensate containing 9 moles of ethylene oxide per mole of phenol) | 2% w/v |
| Antifoam FD (silicone emulsion antifoaming agent) | 0.5% w/v |
| Pluronic L62 (an ethylene oxide/ propylene oxide block co-polymer) | 2% w/v |
| Sopropon T36 (sodium salt of poly-carboxylic acid) | 0.5% w/v |
| Attagel 50 (swelling attapulgite clay) | 0.5% w/v |
| Water | to 100% by volume |

by intimately mixing the ingredients and grinding in a ball-mill for 24 hours. The concentrate thus obtained may be dispersed in water and applied at an application rate of 1 litre per hectare pre- emergence to a crop of maize to control a wide range of broad leaf weeds.

Example 8

A (1 :40) tank mix of (a) the aqueous suspension concentrate of diflufenican (Example 2) and a 50% w/v commercial formulation of atrazine (b) was prepared by adding 0.1 litres of (a) to 4 litres of (b) in 200 litres of water. The resulting spray fluid was applied to one hectare of maize soon after emergence of crop and weeds to control Digitaria sanguinalis, Echinochloa crus-galli, Xanthium strumarium and Amaranthus retroflexus.

Example 9

A (1 :2) tank mix of (a) the aqueous suspension concentrate of diflufenican (Example 2) and a 50% w/v commercial formulation of simazine (b) was prepared by adding 0.25 litres of (a) to 0.5 litres of (b) in 200 litres of water. The resulting spray fluid was applied to one hectare of lupins soon after emergence of crop and weeds to control Galium aparine and Stellaria media.

In the mixed formulations in the Examples hereinbefore, the triazine herbicide may be replaced by other triazine herbicides.

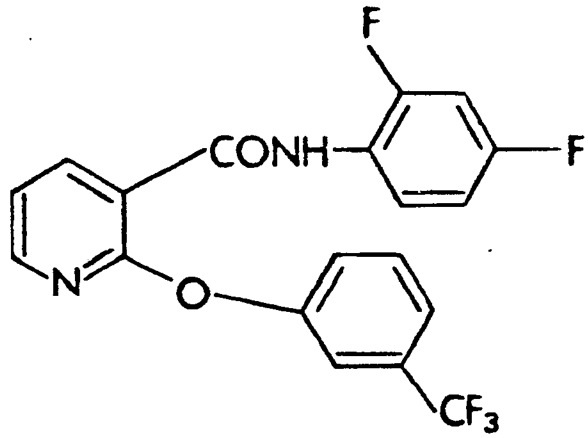

Figure I

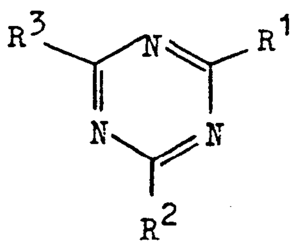

Figure II

## Claims

1. A method of controlling the growth of weeds at a locus which comprises applying to the locus (a) a 1,3,5-triazine herbicide of the general formula :-

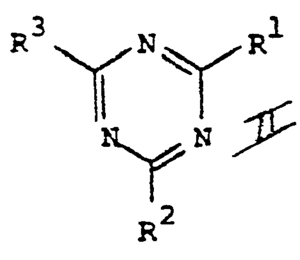

wherein $R^1$ represents the chlorine atom, $R^2$ represents the azido group, or a straight- or branched-chain alkylamino group containing from 1to 4 carbon atoms, a dialkylamino group (in which the alkyl moieties may be the same or different and each contain from 1 to 4 carbon atoms) or a cycloalkylamino group containing from 3 to 7 carbon atoms, in which the alkyl and cycloalkyl moieties may be substituted by one or more substituents chosen from cyano and carboxy groups, straight- or branched-chain alkoxy groups containing from 1 to 4 carbon atoms and straight- or branched-chain alkoxycarbonyl groups containing from 2 to 5 carbon atoms, and $R^3$ represents a straight- or branched- chain alkylamino group containing from 1 to 6 carbon atoms, and (b) diflufenican, which is N-(2,4-difluorophenyl)-2-(3-trifluoromethylphenoxy)nicotinamide, the application rate of the triazine herbicide being from 50g to 10kg per hectare and the applicationn rate of diflufenican being from 25g to 500g per hectare.

2. A method according to claim 1 wherein
(a) $R^2$ represents the 1-cyano-1-methylethylamino group and $R^3$ represents the ethylamino group ; or
(b) $R^2$ and $R^3$ each represent an isopropylamino group ; or

(c) $R^2$ represents the ethylamino group and $R^3$ represents a t.butylamino group ; or

(d) $R^2$ represents the diethylamino group and $R^3$ represents an ethylamino group ; or

(e) $R^2$ represents the ethylamino group and $R^3$ represents an isopropylamino or ethylamino group.

3. A method according to claim 1 or 2 for the control of annual broad-leafed and grass weeds in a maize or lupin crop which comprises the pre- or post-emergence application of (a) a 1,3,5-triazine herbicide and (b) diflufenican at application rates of from 50 to 1000 g/ha and from 25 to 250 g/ha, respectively, in a ratio of 40:1 to 1 :5 by weight.

4. A product comprising (a) a 1,3,5-triazine herbicide as defined in claim 1 and (b) diflufenican which is N-(2,4-difluorophenyl)-2-(3-trifluoromethylphenoxy)-nicotinamide as a combined preparation for simultaneous, separate or sequential use in controlling the growth of weeds at a locus, in which product the ratio of (a) to (b) is 400 :1 to 1 :10 by weight.

5. A product according to claim 4 in which the triazine herbicide is a compound as defined in claim 2.

6. A herbicidal composition which comprises (a) a 1,3,5-triazine herbicide as defined in claim 1 and (b) diflufenican which is N-(2,4-difluorophenyl)-2-(3-trifluoromethylphenoxy)nicotinamide in association with a herbicidally acceptable diluent or carrier and/or surface active agent, in which composition the ratio of (a) to (b) is 400 :1 to 1 :10 by weight.

7. A herbicidal composition according to claim 6 in which the triazine herbicide is a compound as defined in claim 2.

## Patentansprüche

1. Verfahren zur Bekämpfung von Unkrautwachstum an einem Standort, das darin besteht, daß man auf den Standort (a) ein 1,3,5-Triazin-Herbizid der allgemeinen Formel :

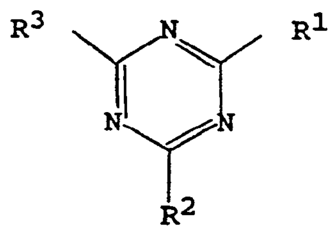

worin $R^1$ das Chloratom, $R^2$ die Azidgruppe oder eine geradkettige oder verzweigte Alkylaminogruppe mit 1 bis 4 Kohlenstoffatomen, eine Dialkylaminogruppe, (in der die Alkylreste gleich oder verschieden sein können und jeweils 1 bis 4 Kohlenstoffatomen aufweisen) oder eine Cycloalkylaminogruppe mit 3 bis 7 Kohlenstoffatomen, in der die Alkyl- und Cycloalkylreste durch einen oder mehreren Substituenten, ausgewählt aus Cyan- und Carboxylgruppen, substituiert sein können, geradkettige oder verzweigte Alkoxygruppen mit 1 bis 4 Kohlenstoffatomen und geradkettige oder verzweigte Alkoxycarbonylgruppen mit 2 bis 5 Kohlenstoffatomen, und $R^3$ eine geradkettige oder verzweigte Alkylaminogruppe mit 1 bis 6 Kohlenstoffatomen bedeuten, und (b) diflufenican, bei dem es sich um N-(2,4-Difluorophenyl)-2-(3-trifluormethylphenoxy)nikotin-amid handelt, wobei die Aufwandmenge an Triazin-Herbizid 50 g bis 10 kg pro Hektar und die Aufwandmenge an Diflufenican 25g bis 500g pro Hektar beträgt, ausbringt.

2. Verfahren nach Anspruch 1, worin

(a) $R^2$ die 1-Cyano-1-Methylethylaminogruppe und $R^3$ die Ethylaminogruppe ; oder

(b) $R^2$ und $R^3$ jeweils eine Isopropylaminogruppe ; oder

(c) $R^2$ die Ethylaminogruppe und $R^3$ eine tert-butylaminogruppe ; oder

(d) $R^2$ die Diethylaminogruppe und $R^3$ eine Ethylaminogruppe ; oder

(e) $R^2$ die Ethylaminogruppe und $R^3$ eine Isopropylamino- oder Ethylaminogruppe bedeuten.

3. Verfahren nach Anspruch 1 oder 2 zur Bekämpfung von einjährigen Unkräutern und Ungräsern in Maisund Lupinenkulturen, bei dem (a) ein 1,3,5-Triazin-Herbizid und (b) Diflufenican mit einer Aufwandmenge von 50 bis 1000g/ha bzw. von 25 bis 250 g/ha in einem Gewichtsverhältnis von 40 :1 bis 1 :5 im Vor- oder Nachauflauf ausgebracht werden.

4. Produkt aus (a) einem 1,3,5-Triazin-Herbizid mit der in Anspruch 1 angegebenen Bedeutung und (b) Diflufenican, bei dem es sich um N-(2,4-Difluorophenyl)-2-(3-trifluoromethylphenoxy)nikotinamid handelt, als kombinierte Zubereitung zur gleichzeitigen, getrennten oder aufeinanderfolgenden Anwendung bei der Bekämpfung von Unkrautwachstum an einem Standort, wobei das Gewichtsverhältnis von (a) zu (b) in jenem

Produkt 400 :1 bis 1 :10 beträgt.

5. Produkt nach Anspruch 4, bei dem es sich bei dem Triazin-Herbizid um eine Verbindung mit der in Anspruch 2 angegebenen Bedeutung handelt.

6. Herbizidzusammensetzung bestehend aus (a) einem 1,3,5-Triazin-Herbizid mit der in Anspruch 1 angegebenen Bedeutung und (b) Diflufenican, bei dem es sich um N-(2,4-Difluorophenyl)-2-(3-trifluoromethylphenoxy) nikotin-amid in Verbindung mit herbizidverträglichen Verdunnungsmitteln oder Träger und/oder oberflächenaktiven Mitteln, wobei das Gewichtverhältnis von (a) zu (b) in jener Zusammensetzung 400 :1 bis 1 :10 beträgt.

7. Herbizidzusammensetzung nach Anspruch 6, bei der es sich bei dem Triazin-Herbizid um eine Verbindung mit der in Anspruch 2 angegebenen Bedeutung handelt.

## Revendications

1. Procédé pour maîtriser la croissance des mauvaises herbes sur un site, qui comprend l'application au site (a) d'un herbicide a base de 1,3,5-triazine de formule générale :

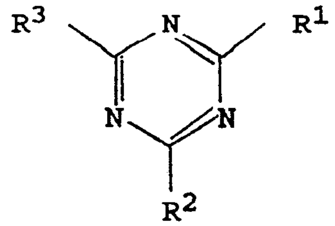

dans laquelle $R^1$ représente un atome de chlore, $R^2$ représente un groupe azido, ou un groupe alkylamino à chaîne linéaire au ramifiée contenant 1 à 4 atomes de carbone, un groupe dialkylamino (dans lequel les fractions alkyle peuvent être identiques ou différentes et contiennent chacune 1 à 4 atomes de carbone) ou un groupe cycloalkylamino contenant 3 à 7 atomes de carbone, dans lequel les fractions alkyle et cycloalkyle peuvent être substituées par un ou plusieurs substituants choisis pami les groupes cyano et carboxy, les groupes alcoxy à chaîne linéaire au ramifiée contenant 1 à 4 atomes de carbone et les groupes alcoxycarbonyle à chaine linéaire au ramifiée contenant 2 à 5 atomes de carbone, et $R^3$ représente un groupe alkylamino à chaine linéaire ou ramifiée contenant 1 à 6 atomes de carbone, et (b) du diflufénican, qui est le N(2,4-difluorophényl)-2-(3-trifluorométhylphénoxy) nicotinamide, la dose d'application de l'herbicide à base de triazine étant de 50 g à 10 kg/ha et la dose d'application du diflufénican étant de 25 g à 500 g/ha.

2. Procédé selon la revendication 1, dans lequel :

(a) $R^2$ représente le groupe 1-cyano-1-méthyléthylamino et $R^3$ représente le groupe éthylamino ; ou

(b) $R^2$ et $R^3$ représentent chacun un groupe isopropylamino ; ou

(c) $R^2$ représente le groupe éthylamino et $R^3$ représente un group t.butylamino ; ou

(d) $R^2$ représente le groupe diéthylamino et $R^3$ représente un groupe éthylamino ; ou

(e) $R^2$ représente le groupe éthylamino et $R^3$ représente un groupe isopropylamino ou éthylamino.

3. Procédé selon la revendication 1 ou 2 pour maîtriser les mauvaises herbes à larges feuilles annuelles et les mauvaises herbes fourragères dans une culture de maîs ou de lupin qui comprend l'application de pré- ou post-émergence de (a) un herbicide à base de 1,3,5-triazine et (b) de diflufénican à des doses d'application de 50 à 1000 g/ha et de 25 à 250 g/ha, respectivement, selon un rapport pondéral de 40 :1 à 1 :5.

4. Produit comprenant (a) un herbicide à base de 1,3,5-triazine tel que défini dan la revendication 1 et (b) du diflufénican qui est le N-(2,4-difluorophényl)-2-(3-trifluorométhyl-phénoxy)-nicotinamide sous forme d'une préparation combinée pour une utilisation simultanée, separée ou successive pour maîtriser la croissance des mauvaises herbes sur un site, dans lequel le rapport de (a) à (b) est de 400 :1 à 1 :10 en poids.

5. Produit selon la revendication 4, dans lequel l'herbicide à base de triazine est un composé tel que défini dans la revendication 2.

6. Composition herbicide qui comprend (a) un herbicide à base de 1,3,5-triazine tel que défini dans la revendication 1 et (b) du diflufénican qui est le N-(2,4-difluorophényl)-2-(3-trifluorométhylphénoxy)nicotinamide en association avec un diluant ou véhicule acceptable du point de vue herbicide et/ou un agent tensioactif, dans laquelle le rapport de (a) à (b) est de 400 :1 à 1 :10 en poids.

7. Composition herbicide selon la revendication 6, dans laquelle l'herbicide à base de triazine est un composé tel que défini dans la revendication 2.